# EUROPEAN PATENT APPLICATION

(11) **EP 4 212 351 A1**
(43) Date of publication of application: **19.07.2023**
(21) Application number: 22305044.4
(22) Date of filing: 18.01.2022
(51) Int. Cl.: B43L 19/00

(54) **ERASER COATED WITH POLYSACCHARIDE**

(71) Applicant: Société BIC, 92110 Clichy (FR)
(72) Inventor: Gouerec, Julien, 92110 Clichy (FR)
(74) Representative: Peterreins Schley

(57) **Abstract**

The present disclosure relates to an eraser comprising at least one outer surface, wherein the outer surface may be at least partly coated by a coating comprising a polysaccharide.

## Description

### Technical Field

The present invention relates to the field of erasers. More specifically, the present invention relates to erasers comprising a polysaccharide coating.

### Background

The present invention relates to erasers. Erasers are stationery articles that are used for removing marks from a writing substrate. For example an eraser may be used to remove pencil markings from paper. Erasers typically exhibit a rubbery consistency and may have a surface with high tack.

Erasers may also be attached to writing instruments, for example pencils or mechanical pencils, typically opposite to the writing instrument's side used for writing. The erasers may be attached to the writing instrument by sliding them into a sleeve for holding. The sleeve may be for example a ferrule, which is crimped after insertion to hold the eraser in place. The sleeve may also be a plastic sleeve, wherein the eraser is held by an interference fit.

However, inserting the eraser into the sleeve during production, in particular a plastic sleeve for an interference fit, may be difficult, as the eraser may have a too high tackiness and/or coefficient of friction, which leads to excessive forces being required to insert the eraser into the sleeve. In particular, the forces may become so high as to destroy the eraser when it is inserted. Further, in mass production the eraser may be stacked upon each other prior to being inserted into the sleeve or moved along tracks or other parts within an automated assembly machine. Due to their rubbery consistency and/or high tack, the erasers may stick to one another or to the tracks of the assembly machine. It may be difficult to separate the erasers from one another and in particular during automized production erasers sticking tracks may lead to production problems.

To reduce the forces necessary to insert the eraser into the sleeve of the writing instrument and/or to prevent the erasers sticking to one another or parts of the assembly machine, the erasers are typically coated. Erasers are typically coated with talc or mica to reduce their tack and/or coefficient of friction. However, during the production process talc and mica dust may become airborne. There is concern over the health effect of talc and mica dust inhaled by workers.

The present disclosure aims to address the aforementioned issues concerning eraser coatings

### Summary

In a first aspect, the present disclosure relates to an eraser comprising at least one outer surface, wherein the outer surface may be at least partly coated by a coating comprising a polysaccharide.

In some embodiments, the polysaccharide may comprise a cellulose or a starch, and in particular a starch.

In some embodiments, the coating may comprise less than 5 wt.-%, more specifically less than 3 wt.-% and in particular substantially no or no talc, relative to the total weight of the coating.

In some embodiments, the coating may comprise less than 5 wt.-%, more specifically less than 3 wt.-% and in particular substantially no or no mica, relative to the total weight of the coating.

In some embodiments, the coating may comprise at least 70 wt.-%, more specifically at least about 90 wt.-% and in particular at least about 99 wt.-% of the polysaccharide, relative to the total weight of the coating excluding water.

In some embodiments, the coating may comprise at least 70 wt.-%, more specifically at least about 90 wt.-% and in particular at least about 99 wt.-% of starch, relative to the total weight of the coating.

In some embodiments, the starch may comprise amylose and amylopectin.

In some embodiments, the starch may comprise between about 5 mol % to about 90 mol % amylose, more specifically between about 30 mol % to about 75 mol % amylose and in particular between about 40 mol % to about 60 mol % amylose, relative to the total molar amount of starch.

In some embodiments, the molar ratio between the amylose and the amylopectin may be between about 1:19 to about 9:1, more specifically between about 1:3 to about 3:1 and in particular between about 1:1.5 to about 1.5:1.

In some embodiments, the amylose may have a molecular weight between about 10⁵ to about 10⁶ Da.

In some embodiments, the degree of polymerization of the amylose may be between about 1000 to about 1900.

In some embodiments, the amylopectin may have a molecular weight between about 10⁷ to about 10⁹ Da.

In some embodiments, the average size of the unit chains of the amylopectin may be between about 20 to about 25.

In some embodiments, the coating may be in the form of particles and wherein the particles are round, oval and/or kidney shaped.

In some embodiments, the particles have a D₅₀ between about 1 µm to about 30 µm, more specifically between about 3 µm to about 20 µm, and in particular between about 5 µm to about 10 µm.

In some embodiments, the shape of the eraser may be cylindrical.

In some embodiments, the eraser may have a length between about 2 mm to about 30 mm, more specifically between about 5 mm to about 20 mm and in particular between about 7 mm to about 15 mm.

In some embodiments, the eraser may have a diameter between about 1 mm to about 20 mm, more specifically between about 3 mm to about 10 mm and in particular between about 5 mm to about 8 mm.

In some embodiments, the eraser may be a polyhedron, in particular a cuboid.

In some embodiments, the eraser may have a first edge length between about 5 mm to about 100 mm, more specifically between about 10 mm to about 70 mm and in particular between about 20 mm to about 50 mm.

In some embodiments, the eraser may have a second edge length between about 5 mm to about 80 mm, more specifically between about 10 mm to about 60 mm and in particular between about 15 mm to about 40 mm.

In some embodiments, the eraser may have a third edge length or thickness between about 2 mm to about 40mm, more specifically between about 5 mm to about 30 mm and in particular between about 10 mm to about 20 mm.

In some embodiments, the eraser may comprise one or more polymers.

In some embodiments, the eraser may comprise at least 50 wt.-%, more specifically at least 70 wt.-% and in particular at least 90 wt.-% of the one or more polymers, relative to the total weight of the eraser.

In some embodiments, the eraser may comprise at least 10 wt.-%, more specifically at least 15 wt.-% and in particular at least 20 wt.-% of the one or more polymers, relative to the total weight of the eraser.

In some embodiments, the eraser may comprise between about 10 wt.-% to about 50 wt.-%, more specifically between about 15 wt.-% to about 40 wt.-% and in particular between about 20 wt.-% to about 30 wt.-% of the one or more polymers, relative to the total weight of the eraser.

In some embodiments, the one or more polymers may comprise a thermoplastic polymer, an elastomer and/or a thermoplastic elastomer.

In some embodiments, the one or more polymer may comprise a thermoplastic vulcanizate, more specifically elastomeric particles comprised in a thermoplastic polymer matrix in particular EPDM rubber particles comprised in a polypropylene matrix.

In some embodiments, the one or more polymer may comprise polyethylene.

In some embodiments, the one or more polymers may comprise a styrenic block copolymer, in particular SBS and/or SEBS.

In some embodiments, the one or more polymers may comprise polyvinylchloride.

In some embodiments, the eraser may comprise one or more fillers, more specifically a mineral filler and in particular CaCO₃.

In some embodiments, the eraser may comprise between about 25 wt.-% to about 75 wt.-%, more specifically between about 35 wt.-% to about 65 wt.-% and in particular between about 45 wt.-% to about 55 wt.-% of the one or more fillers

In some embodiments, the eraser may comprise a colorant, more specifically between about 2 wt.-% to about 12 wt.-% and in particular between about 4 wt.-% to about 8 wt.-% of the colorant, relative to the total weight of the eraser

In some embodiments, the eraser may comprise between about 0.1 mg to about 5 mg, more specifically between about 0.3 mg to about 2 mg and in particular between about 0.6 mg to about 1.2 mg of the coating.

In some embodiments, the eraser may comprise an outer surface and wherein the eraser may comprise between about 0.04 mg/cm² to about 1.85 mg/cm², more specifically between about 0.11 mg/cm² to about 0.74 mg/cm² and in particular between about 0.22 to about 0.44 mg/cm² of the coating on the at least one outer surface.

In some embodiments, the eraser may comprise at least 5 wt.-% less more specifically at least 10 wt.-% less and in particular at least 20 wt.-% less of the coating compared to an eraser coated by talc and/or mica.

In a second aspect, the present disclosure relates to a writing instrument comprising an eraser according to any preceding claim.

In some embodiments, the eraser may be comprised within a sleeve, in particular a sleeve positioned opposed to a writing orifice.

In a third aspect, the present disclosure relates to a process for coating an eraser, wherein the process comprises placing an eraser in a mixer, adding a polysaccharide to the mixer and mixing the eraser and the polysaccharide.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Erasers are stationery items used to remove marks from a writing substrate. Erasers may be attached to writing instruments, such as pencils or mechanical pencils. The eraser may be attached to the writing instrument through a sleeve wherein the eraser is inserted. During production of the writing instrument, the eraser may be pushed into the sleeve by force to form an interference fit. However, pushing the eraser into the sleeve may require high forces, in particular the forces may become so high that the eraser or parts thereof are damaged. Further, the erasers may be stacked prior to their insertion into the sleeve, for example in an eraser magazine. The erasers may also come into contact with machinery, in particular the assembly machine used to insert erasers into a sleeve. During assembly the erasers may have to move along tracks in the assembly machine to be transported from the eraser magazine to the attachment zone, where erasers are attached to the writing instrument. The erasers may however adhere to the tracks, which may lead to blocking of the assembly machine.

Additionally, erasers may not be intended to be inserted into a writing instrument but used as a stand-alone device. However, these erasers may also be stacked, for example prior to their packing. Due to the typically rubbery nature of the erasers, the erasers may adhere to one another. Erasers may also adhere to their packaging.

To reduce the forces necessary to insert the eraser into the sleeve of the writing instrument and/or to prevent the eraser sticking to one another, machinery or their packaging, the erasers are typically coated prior to their insertion into the writing instrument, stacking or packaging. Erasers are typically coated with talc or mica to reduce their tack and/or coefficient of friction. However, during the production process talc and mica dust may become airborne. There is concern over the effect of talc and mica dust inhaled by workers, in particular long-term health effects. It has been surprisingly found that polysaccharides may be used to reduce the tack and coefficient of friction of the erasers.

In a first aspect, the present disclosure relates to an eraser comprising at least one outer surface, wherein the outer surface may be at least partly coated by a coating comprising a polysaccharide.

In some embodiments, all surfaces of the eraser may be coated by the coating.

The term " polysaccharide" is well-known and within this disclosure attributed its common meaning in the art. The term "polysaccharide" may refer to polymeric carbohydrates comprising monosaccharide units linked by glycosidic linkages. Additionally or alternatively, the term "polysaccharide" may refer to a molecular comprising at least 11 monosaccharides linked by glycosidic linkages. Polysaccharides are found abundantly in nature, as they are synthetized by living beings as structural components or energy storage.

A coating comprising a polysaccharide may comprise or consist of renewable resources. Talc and mica are minerals and therefore non-renewable resources. Further, there is a lower concern regarding a health impact regarding inhalation of polysaccharides concentrations found in workplace environments, compared to mica and/or talc.

In some embodiments, the polysaccharide may comprise a homopolysaccharide. Polysaccharides consisting of only one type of monomer unit are referred to as homopolysaccharides or homoglycans. Polysaccharides comprising more than one type of monomer are referred to as heteropolysaccharides or heteroglycans.

In some embodiments, the polysaccharide may comprise a cellulose and/or a starch, and in particular a starch.

In some embodiments, the polysaccharide may consist of a cellulose or a starch, and in particular a starch.

The most common polysaccharide is cellulose, which is a structural polysaccharide comprising repeating D-glucose units linked by beta-linkages. A common polysaccharide used in plants for energy storage is starch. Starch typically comprises amylopectin and amylose. Polysaccharides may be linear or branched. Amylose is a polysaccharide comprising repeating D-glucose units linked by alpha-linkages, in particular (1-4) linkages. Amylose has a low degree of branching or no branching at all and can form a double helix structure, in particular two units of amylose may for a double helix structure. Amylopectin is also a polysaccharide comprising repeating D-glucose units linked by alpha-linkages, in particular (1,4) linkages. However, unlike amylose, amylopectin has a high degree of branching, in particular due to alpha-(1,6) linkages to other amylopectin chains comprising repeating D-glucose units linked by alpha-linkages.

It has been found that cellulose and starch and in particular starch may be preferable polysaccharides for reducing the coefficient of friction and/or tack of erasers. Further, there is a lower concern for a health impact regarding starches and/or cellulose in concentrations found in workplace environments. Cellulose and starch dust in high concentrations may lead to irritation of the airways. However, long-term detrimental health effects have not been found as of now. Starch is for example not considered hazardous by the OSHA Hazard Communication Standard (29 CFR 1910.1200).

In some embodiments, the coating may comprise less than 5 wt.-%, more specifically less than 3 wt.-% and in particular substantially no or no talc, relative to the total weight of the coating. A coating comprising less, or no talc may be preferable in regard to health concerns regarding worker exposure.

In some embodiments, the coating may comprise less than 5 wt.-%, more specifically less than 3 wt.-% and in particular substantially no or no mica, relative to the total weight of the coating. A coating comprising less, or no mica may be preferable in regard to health concerns regarding worker exposure.

In some embodiments, the coating may comprise at least 70 wt.-%, more specifically at least about 90 wt.-% and in particular at least about 99 wt.-% of the polysaccharide, relative to the total weight of the coating excluding water. A higher proportion of the polysaccharide in the coating may reduce the tack and/or coefficient of friction more effectively. The term "excluding water" shall indicate, that the relative amount of the starch in the coating shall be determined, as if no water were present in the coating. For example, if the coating has a total weight of 3 mg of which 2.5 mg are starch and 0.2 mg were water, the relative amount of starch excluding water would be 89.29 wt.-%.

In some embodiments, the coating may comprise at least 70 wt.-%, more specifically at least about 90 wt.-% and in particular at least about 99 wt.-% of starch, relative to the total weight of the coating. As starches are commonly extracted from plants, wherein the starch may be in contact with or soluted in water, starches often comprise water after production. Starch may be dried to remove more water. High degree of water may lead to starch becoming tacky and hence a coating comprising starch and high amounts of water may not efficiently reduce the tack of the eraser surface. A low content of water, e.g. less than 30 wt.-%, more specifically less than 10 wt.-% and in particular less than 1 wt.-% may result in a starch which reduces the tack and/or coefficient of friction more efficiently.

In some embodiments, the starch may comprise amylose and amylopectin. Most starches comprise amylose and amylopectin. Some plants, for example potatoes, maize or rice have been bred or genetically modified to only or almost only comprise amylopectin and substantially no or no amylose for "waxy" variants. It has been found that starches comprising amylose and amylopectin may reduce the tack and/or coefficient of the eraser more effectively compared to those no or substantially no amylose.

Surprisingly, it has been found that starch obtained from native peas may be particularly effective in reducing the tack and/or coefficient of friction of erasers. Without wishing to be bound by theory, it is believed that the chemical and physical characteristics of starch obtained from native peas may cause the effectiveness. In particular, it has been found that starch obtained from native peas may comprise more amylose and/or a higher ratio of amylose:amylopectin, compared to starch obtained from other sources. Due to its low degree of branching, amylose itself and a starch comprising a higher proportion of amylose may exhibit a higher crystallinity compared to amylopectin or a starch comprising a lower proportion of amylose, as well as a lower water solubility. Without wishing to be bound by theory, it is believed that this higher crystallinity may improve the coefficient of friction and tackiness reduction of the starch when coating the at least one outer surface of the eraser.

In some embodiments, the starch may comprise between about 5 mol % to about 90 mol % amylose, more specifically between about 30 mol % to about 75 mol % amylose and in particular between about 40 mol % to about 60 mol % amylose, relative to the total molar amount of starch.

In some embodiments, the molar ratio between the amylose and the amylopectin may be between about 1:19 to about 9:1, more specifically between about 1:3 to about 3:1 and in particular between about 1:1.5 to about 1.5:1.

Methods for analysing the chemical nature of starch are well-known in the art. For example, the amylose and amylopectin content may be identified for example by UV-vis-spectroscopy. Alternatively or additionally, the amylose content may be determined by iodometry and/or iodometry in conjunction with UV-vis-spectroscopy, as the amylose forms a blue complex with iodine.

In some embodiments, the amylose may have a molecular weight between about 10⁵ to about 10⁶ Da. The molecular weight of the amylose may be determined by size-exclusion chromatography and/or field flow fractionation. Alternatively or additionally, the molecular weight may be determined by capillary electrophoreses following enzymatic processing.

In some embodiments, the degree of polymerization of the amylose may be between about 1000 to about 1900. The degree of polymerization may be determined by capillary electrophoreses following enzymatic processing.

In some embodiments, the amylopectin may have a molecular weight between about 10⁷ to about 10⁹ Da. The molecular weight of the amylose may be determined by size-exclusion chromatography and/or field flow fractionation. Alternatively or additionally, the molecular weight may be determined by capillary electrophoreses following enzymatic processing.

The amylopectin and amylose may separated before analysis. For example, the starch may undergo solution in an organic solvent, for example DMSO or an alkaline solution, such as NaOH. The solution may be performed at a temperature below the melting point of amylopectin to only solute the amylose. The soluted amylose may then be separated from the amylopectin. Other means of separation are also known in the art.

In some embodiments, the average size of the unit chains of the amylopectin may be between about 20 to about 25. The average size of the unit chains of the amylopectin may be analysed by high-performance anion-exchange chromatography. The high-performance anion-exchange chromatography may follow deproteinization of the starch with protease and sodium bisulfite, and then hydrolysis / debranching with isoamylase.

In some embodiments, the coating may be in the form of particles and wherein the particles are round, oval and/or kidney shaped. Round, oval and/or kidney shaped particles may reduce the coefficient of friction between the eraser's outer surface and another surface, e.g. another eraser's outer surface, more efficiently. Without wishing to be bound by theory, it is believed that the rounded shapes may reduce the coefficient of friction more efficiently as rounded polysaccharide particles may roll between the eraser's outer surface and the other surface, whereas starch comprising edges, for example rice starch, may interlock with other starch particles or the surfaces. The shape of the particles may be determined by scanning electron microscopy.

In some embodiments, the particles have a D₅₀ between about 1 µm to about 30 µm, more specifically between about 3 µm to about 20 µm, and in particular between about 5 µm to about 10 µm. Smaller particles may more effectively reduce the coefficient of friction and may coat the eraser's outer surface more evenly. Further, larger particles may also increase the risk of abrasion occurring during the processing of the erasers. Smaller particles may however increase the amount of dust generated during the processing. The particle size may be determined by scanning electron microscopy.

In some embodiments, the shape of the eraser may be cylindrical. A cylindrical eraser may be preferable for inclusion into a writing instrument, as the round cross-section may provide an improved interference fit with the sleeve. Further, a cylindrical eraser, in particular when included in a writing instrument, may exhibit anisotropic properties. For example, a square eraser may require aligning the eraser's outer surface with writing substrate. Further, eraser included in writing instruments may be smaller to not interfere with the weight balance of the writing instrument and to fit to the general dimensions of the writing instrument. It may be preferable to use the coating on the outer surface of an eraser intended to be included in a writing instrument, in particular a cylindrical eraser, as the coating may be especially advantageous during automated assembly of writing instruments comprising erasers.

In some embodiments, the eraser may have a length between about 2 mm to about 30 mm, more specifically between about 5 mm to about 20 mm and in particular between about 7 mm to about 15 mm.

In some embodiments, the eraser may have a diameter between about 1 mm to about 20 mm, more specifically between about 3 mm to about 10 mm and in particular between about 5 mm to about 8 mm.

In some embodiments, the eraser may be a polyhedron, in particular a cuboid. Stand-alone erasers may preferably be polyhedrons to improve the user's handling. Further, in general, stand alone eraser may have larger dimensions to improve the user's handling and increase the erasers lifetime.

In some embodiments, the eraser may have a first edge length between about 5 mm to about 100 mm, more specifically between about 10 mm to about 70 mm and in particular between about 20 mm to about 50 mm.

In some embodiments, the eraser may have a second edge length between about 5 mm to about 80 mm, more specifically between about 10 mm to about 60 mm and in particular between about 15 mm to about 40 mm.

In some embodiments, the eraser may have a third edge length or thickness between about 2 mm to about 40mm, more specifically between about 5 mm to about 30 mm and in particular between about 10 mm to about 20 mm.

In some embodiments, the eraser may comprise one or more polymers.

In some embodiments, the eraser may comprise at least 50 wt.-%, more specifically at least 70 wt.-% and in particular at least 90 wt.-% of the one or more polymers, relative to the total weight of the eraser.

In some embodiments, the eraser may comprise at least 10 wt.-%, more specifically at least 15 wt.-% and in particular at least 20 wt.-% of the one or more polymers, relative to the total weight of the eraser.

In some embodiments, the eraser may comprise between about 10 wt.-% to about 50 wt.-%, more specifically between about 15 wt.-% to about 40 wt.-% and in particular between about 20 wt.-% to about 30 wt.-% of the one or more polymers, relative to the total weight of the eraser.

In some embodiments, the one or more polymers may comprise a thermoplastic polymer, an elastomer and/or a thermoplastic elastomer. The choice of eraser material is important for the eraser to fulfill its technical task. In particular, the material of an eraser may typically exhibit a high tack and/or coefficient of friction. More specifically elastomers or thermoplastic elastomers may exhibit both a high coefficient of friction and in particular a high tack.

In some embodiments, the one or more polymer may comprise a thermoplastic vulcanizate, more specifically elastomeric particles comprised in a thermoplastic polymer matrix and in particular EPDM rubber particles comprised in a polypropylene matrix.

In some embodiments, the one or more polymer may comprise polyethylene.

In some embodiments, the one or more polymers may comprise a styrenic block copolymer, in particular SBS and/or SEBS. As mentioned above, thermoplastic elastomers may exhibit both a high coefficient of friction and in particular a high tack.

In some embodiments, the one or more polymers may comprise polyvinylchloride.

In some embodiments, the eraser may comprise one or more fillers, more specifically a mineral filler and in particular CaCO₃.

In some embodiments, the eraser may comprise between about 25 wt.-% to about 75 wt.-%, more specifically between about 35 wt.-% to about 65 wt.-% and in particular between about 45 wt.-% to about 55 wt.-% of the one or more fillers. Fillers may improve the mechanical stability of the eraser and/or may decrease the raw material price.

In some embodiments, the eraser may comprise a colorant, more specifically between about 2 wt.-% to about 12 wt.-% and in particular between about 4 wt.-% to about 8 wt.-% of the colorant, relative to the total weight of the eraser. Erasers, in particular erasers attached to writing instruments, may form abrasion when used. Adding a colorant may facilitate removal of the abrasion after use of the eraser, as it may contrast the writing substrate.

In some embodiments, the eraser may comprise between about 0.1 mg to about 5 mg, more specifically between about 0.3 mg to about 2 mg and in particular between about 0.6 mg to about 1.2 mg of the coating.

In some embodiments, the eraser may comprise an outer surface and wherein the eraser may comprise between about 0.04 mg/cm² to about 1.85 mg/cm², more specifically between about 0.11 mg/cm² to about 0.74 mg/cm² and in particular between about 0.22 to about 0.44 mg/cm² of the coating on the at least one outer surface. It has been surprisingly found that an eraser's coating being a polysaccharide-based coating, in particular a starch coating, may reduce the amount of required coating, compared to a mica or talc coating.

In some embodiments, the eraser may comprise at least 5 wt.-% less more specifically at least 10 wt.-% less and in particular at least 20 wt.-% less of the coating compared to an eraser coated by talc and/or mica.

In a second aspect, the present disclosure relates to a writing instrument comprising an eraser according to any preceding claim.

In some embodiments, the eraser may be comprised within a sleeve, in particular a sleeve positioned opposed to a writing orifice.

In some embodiments, the writing instrument may be a mechanical pencil.

In a third aspect, the present disclosure relates to a process for coating an eraser, wherein the process comprises placing an eraser in a mixer, adding a polysaccharide to the mixer and mixing the eraser and the polysaccharide.

The present disclosure furthermore relates to the following aspects.

### Aspects

1. In a first aspect, the present disclosure relates to an eraser comprising:
   at least one outer surface, wherein the outer surface is at least partly coated by a coating comprising a polysaccharide.
2. The eraser according to aspect 1, wherein the polysaccharide comprises a cellulose or a starch, and in particular a starch.
3. The eraser according to any preceding aspect, wherein the coating comprises less than 5 wt.-%, more specifically less than 3 wt.-% and in particular substantially no or no talc, relative to the total weight of the coating.
4. The eraser according to any preceding aspect, wherein the coating comprises less than 5 wt.-%, more specifically less than 3 wt.-% and in particular substantially no or no mica, relative to the total weight of the coating.
5. The eraser according to any preceding aspect, wherein the coating comprises at least 70 wt.-%, more specifically at least about 90 wt.-% and in particular at least about 99 wt.-% of the polysaccharide, relative to the total weight of the coating excluding water.
6. The eraser according to any preceding aspect, wherein the coating comprises at least 70 wt.-%, more specifically at least about 90 wt.-% and in particular at least about 99 wt.-% of starch, relative to the total weight of the coating.
7. The eraser according to any one of aspects 2 to 6, wherein the starch comprises amylose and amylopectin.
8. The eraser according to any one of aspects 2 to 7, wherein the starch comprises between about 5 mol % to about 90 mol % amylose, more specifically between about 30 mol % to about 75 mol % amylose and in particular between about 40 mol % to about 60 mol % amylose, relative to the total molar amount of starch.
9. The eraser according to any one of aspects 7 or 8, wherein the molar ratio between the amylose and the amylopectin is between about 1:19 to about 9:1, more specifically between about 1:3 to about 3:1 and in particular between about 1:1.5 to about 1.5:1.
10. The eraser according to any one of aspects 7 to 9, wherein the amylose has a molecular weight between about 10⁵ to about 10⁶ Da.
11. The eraser according to any one of aspects 7 to 10, wherein the degree of polymerization of the amylose is between about 1000 to about 1900.
12. The eraser according to any one of aspects 7 to 11, wherein the amylopectin has a molecular weight between about 10⁷ to about 10⁹ Da.
13. The eraser according any one of aspects 7 to 12, wherein the average size of the unit chains of the amylopectin is between about 20 to about 25.
14. The eraser according to any preceding aspect, wherein the coating is in the form of particles and wherein the particles are round, oval and/or kidney shaped.
15. The eraser according to aspect 14, wherein the particles have a D₅₀ between about 1 µm to about 30 µm, more specifically between about 3 µm to about 20 µm, and in particular between about 5 µm to about 10 µm.
16. The eraser according to any preceding aspect, wherein the shape of the eraser is cylindrical.
17. The eraser according to aspect 16, wherein the eraser has a length between about 2 mm to about 30 mm, more specifically between about 5 mm to about 20 mm and in particular between about 7 mm to about 15 mm.
18. The eraser according to aspect 16 or 17, wherein the eraser has a diameter between about 1 mm to about 20 mm, more specifically between about 3 mm to about 10 mm and in particular between about 5 mm to about 8 mm.
19. The eraser according to any one of aspect 1 to 15, wherein the eraser is a polyhedron, in particular a cuboid.
20. The eraser according to aspect 19, wherein the eraser has a first edge length between about 5 mm to about 100 mm, more specifically between about 10 mm to about 70 mm and in particular between about 20 mm to about 50 mm.
21. The eraser according to aspect 19 or 20, wherein the eraser has a second edge length between about 5 mm to about 80 mm, more specifically between about 10 mm to about 60 mm and in particular between about 15 mm to about 40 mm.
22. The eraser according to any one of aspect 19 to 21, wherein the eraser has a third edge length or thickness between about 2 mm to about 40mm, more specifically between about 5 mm to about 30 mm and in particular between about 10 mm to about 20 mm.
23. The eraser according to any preceding aspect, wherein the eraser comprises one or more polymers.
24. The eraser according to any aspect 23, wherein the eraser comprises at least 50 wt.-%, more specifically at least 70 wt.-% and in particular at least 90 wt.-% of the one or more polymers, relative to the total weight of the eraser.
25. The eraser according to aspect 23, wherein the eraser comprises at least 10 wt.-%, more specifically at least 15 wt.-% and in particular at least 20 wt.-% of the one or more polymers, relative to the total weight of the eraser.
26. The eraser according to aspect 23, wherein the eraser comprises between about 10 wt.-% to about 50 wt.-%, more specifically between about 15 wt.-% to about 40 wt.-% and in particular between about 20 wt.-% to about 30 wt.-% of the one or more polymers, relative to the total weight of the eraser.
27. The eraser according to any one of aspect 23 to 26, wherein the one or more polymers comprises a thermoplastic polymer, an elastomer and/or a thermoplastic elastomer.
28. The eraser according to any one of aspect 23 to 27, wherein the one or more polymer comprises a thermoplastic vulcanizate, more specifically elastomeric particles comprised in a thermoplastic polymer matrix and in particular EPDM rubber particles comprised in a polypropylene matrix.
29. The eraser according to any one of aspect 23 to 28, wherein the one or more polymer comprises polyethylene.
30. The eraser according to any one of aspect 23 to 29, wherein the one or more polymers comprises a styrenic block copolymer, in particular SBS and/or SEBS.
31. The eraser according to any one of aspects 23 to 30, wherein the one or more polymers comprises polyvinylchloride.
32. The eraser according to any preceding aspect, wherein the eraser comprises one or more fillers, more specifically a mineral filler and in particular CaCO₃.
33. The eraser according to aspect 32, wherein the eraser comprises between about 25 wt.-% to about 75 wt.-%, more specifically between about 35 wt.-% to about 65 wt.-% and in particular between about 45 wt.-% to about 55 wt.-% of the one or more fillers.
34. The eraser according to any preceding aspect, wherein the eraser comprises a colorant, more specifically between about 2 wt.-% to about 12 wt.-% and in particular between about 4 wt.-% to about 8 wt.-% of the colorant, relative to the total weight of the eraser.
35. The eraser according to any preceding aspect, wherein the eraser comprises between about 0.1 mg to about 5 mg, more specifically between about 0.3 mg to about 2 mg and in particular between about 0.6 mg to about 1.2 mg of the coating.
36. The eraser according to any preceding aspect, wherein the eraser comprises an outer surface and wherein the eraser comprises between about 0.04 mg/cm² to about 1.85 mg/cm², more specifically between about 0.11 mg/cm² to about 0.74 mg/cm² and in particular between about 0.22 to about 0.44 mg/cm² of the coating on the at least one outer surface.
37. The eraser according to any preceding aspect, wherein the eraser comprises at least 5 wt.-% less more specifically at least 10 wt.-% less and in particular at least 20 wt.-% less of the coating compared to an eraser coated by talc and/or mica.
38. A writing instrument comprising an eraser according to any preceding aspect.
39. The writing instrument according to aspect 38, wherein the eraser is comprised within a sleeve, in particular a sleeve positioned opposed to a writing orifice.
40. In a second aspect, the present disclosure relates to a process for coating an eraser, wherein the process comprises:
   placing an eraser in a mixer;
   adding a polysaccharide to the mixer;
   mixing the eraser and the polysaccharide.

## Claims

1. An eraser comprising:
at least one outer surface, wherein the outer surface is at least partly coated by a coating comprising a polysaccharide.

2. The eraser according to claim 1, wherein the polysaccharide comprises a cellulose or a starch, and in particular a starch.

3. The eraser according to any preceding claim, wherein the coating comprises less than 5 wt.-%, more specifically less than 3 wt.-% and in particular substantially no or no talc and/or mica, relative to the total weight of the coating.

4. The eraser according to claim 2 or 3, wherein the coating comprises at least 70 wt.-%, more specifically at least about 90 wt.-% and in particular at least about 99 wt.-% of starch, relative to the total weight of the coating.

5. The eraser according to any one of claims 2 to 4, wherein the starch comprises amylose and amylopectin, more specifically wherein the starch comprises between about 5 mol % to about 90 mol % amylose, more specifically between about 30 mol % to about 75 mol % amylose and in particular between about 40 mol % to about 60 mol % amylose, relative to the total molar amount of starch.

6. The eraser according to any one of claims 2 to 5, wherein the molar ratio between the amylose and the amylopectin is between about 1:19 to about 9:1, more specifically between about 1:3 to about 3:1 and in particular between about 1:1.5 to about 1.5:1.

7. The eraser according to any preceding claim, wherein the coating is in the form of particles and wherein the particles are round, oval and/or kidney shaped.

8. The eraser according to claim 7, wherein the particles have a D₅₀ between about 1 µm to about 30 µm, more specifically between about 3 µm to about 20 µm, and in particular between about 5 µm to about 10 µm.

9. The eraser according to any preceding claim, wherein the shape of the eraser is cylindrical, more specifically wherein the shape of the eraser is cylindrical and the eraser has a length between about 2 mm to about 30 mm, more specifically between about 5 mm to about 20 mm and in particular between about 7 mm to about 15 mm and/or wherein the eraser has a diameter between about 1 mm to about 20 mm, more specifically between about 3 mm to about 10 mm and in particular between about 5 mm to about 8 mm.

10. The eraser according to any preceding claim, wherein the eraser comprises one or more polymers and wherein the one or more polymers comprises a thermoplastic polymer, an elastomer and/or a thermoplastic elastomer.

11. The eraser according to any preceding claim, wherein the eraser comprises one or more polymers and wherein the one or more polymer comprises a thermoplastic vulcanizate, more specifically elastomeric particles comprised in a thermoplastic polymer matrix and in particular EPDM rubber particles comprised in a polypropylene matrix; and/or wherein the one or more polymer comprises a styrenic block copolymer, in particular SBS and/or SEBS.

12. The eraser according to any preceding claim, wherein the eraser comprises one or more polymers and wherein the one or more polymer comprises polyethylene and/or polyvinyl chloride.

13. The eraser according to any preceding claim, wherein the eraser comprises one or more fillers, more specifically a mineral filler and in particular CaCO₃.

14. The eraser according to any preceding claim, wherein the eraser comprises an outer surface and wherein the eraser comprises between about 0.04 mg/cm² to about 1.85 mg/cm², more specifically between about 0.11 mg/cm² to about 0.74 mg/cm² and in particular between about 0.22 to about 0.44 mg/cm² of the coating on the at least one outer surface.

15. A writing instrument comprising an eraser according to any preceding claim.
